# EUROPÄISCHE PATENTSCHRIFT

(11) **EP 3 396 216 B1**
(45) Veröffentlichungstag und Bekanntmachung des Hinweises auf die Patenterteilung: **02.06.2021**
(21) Anmeldenummer: 18168381.4
(22) Anmeldetag: 20.04.2018
(51) Int. Cl.: F16J 15/3228, F16J 15/3232

(54) **DICHTUNG**
SEAL
JOINT D'ÉTANCHÉITÉ

(30) Priorität: 27.04.2017 DE 102017004061
(43) Veröffentlichungstag der Anmeldung: 31.10.2018
(73) Patentinhaber: Carl Freudenberg KG, 69469 Weinheim (DE)
(72) Erfinder: Dahlhaus-Preußler, Ulrich, 68535 Edingen-Neckarhausen (DE); Frölich, Dr. Daniel, 69469 Weinheim (DE); Bär, Ludwig, 69509 Mörlenbach (DE); Wiedemann, Pit, 39114 Magdeburg (DE); Pfeifer, Christian, 06406 Bernburg (DE)

(56) Entgegenhaltungen:
- EP-A1- 2 280 201
- EP-A1- 2 397 726
- US-A1- 2003 031 828

## Beschreibung

### Technisches Gebiet

Die Erfindung betrifft eine Dichtung, umfassend einen Tragring und zumindest einen Dichtring, wobei der Dichtring und der Tragring miteinander verbunden sind, wobei der Tragring einen Außenumfang aufweist und in radialer Richtung außenumfangsseitig von einer Ummantelung des Dichtrings zumindest teilweise umschlossen ist, wobei der Dichtring zumindest eine dynamisch beanspruchte Dichtlippe aufweist, die auf der der Ummantelung radial abgewandten Seite des Dichtrings angeordnet ist, wobei der Dichtring aus einem elektrisch leitfähigen und polymeren Werkstoff besteht und wobei die Ummantelung und die Dichtlippe einstückig in einander übergehend ausgebildet sind, wobei die dynamisch beanspruchte Dichtlippe als Vorschaltdichtlippe ausgebildet ist und wobei der dynamisch beanspruchten Dichtlippe eine dynamisch beanspruchte weitere Dichtlippe als Hauptdichtlippe zur Abdichtung eines abzudichtenden Mediums in einem abzudichtenden Raum in einer funktionstechnischen Reihenschaltung in axialer Richtung vorgeschaltet ist.

### Stand der Technik

Eine solche Dichtung ist aus der US 2003/031828 A1 bekannt. Als polymerer Werkstoff für den Dichtring ist zum Beispiel PTFE genannt, das durch zumindest einen Füllstoff modifiziert sein kann, um bestimmte, gewünschte Dichtungseigenschaften, wie beispielsweise mechanische Festigkeit, Schmierfähigkeit, Wärmeleitfähigkeit und/oder elektrische Leitfähigkeit, Verschleißbeständigkeit oder Erscheinung, das heißt Farbe, bereitzustellen.

Aus der EP 2 397 726 A1 ist eine weitere Dichtung bekannt sowie ein Verfahren zu deren Herstellung. Die Dichtung umfasst ein Trägerteil aus einem metallischen Werkstoff, das von einer Beschichtung aus einem Elastomer umschlossen ist. Die Dichtung wird dadurch hergestellt, dass zunächst das Trägerteil gesondert erzeugt und mit einer vollständigen Beschichtung beschichtet wird. Auch das Dichtelement wird gesondert erzeugt. Das Trägerteil und das Dichtelement werden dann durch eine Klebeverbindung zu einer Baueinheit verbunden.

Eine weitere Dichtung ist aus der DE 10 2014 010 269 A1 bekannt. Der Tragring besteht aus einem zähharten Werkstoff, zum Beispiel einem metallischen oder einem polymeren Werkstoff. Der Dichtring ist mittelbar oder unmittelbar mit dem Tragring verbunden, wobei der Dichtring aus einem elastomeren Werkstoff besteht.
Außerdem umfasst die vorbekannte Dichtung eine im Wesentlichen kreisringförmig ausgebildete Scheibe aus einem elektrisch leitfähigen und luftdurchlässigen Werkstoff, wobei die Scheibe - bezogen auf den Tragring - als separat erzeugtes Einzelteil ausgebildet und mit dem Tragring verbunden ist. Die Scheibe besteht aus einem elektrisch leitfähigen Vliesstoff und ist als Vorschaltdichtung ausgebildet.
Die Vorschaltdichtung ist der Dichtlippe des Dichtrings mit axialem Abstand benachbart zugeordnet. Während der bestimmungsgemäßen Verwendung ist die Vorschaltdichtung auf der der Umgebung zugewandten Seite der Dichtlippe angeordnet.
Die Vorschaltdichtung hat die Aufgabe, Verunreinigungen aus der Umgebung an einem Vordringen zur Dichtlippe zu hindern. Dadurch werden gleichbleibend gute Gebrauchseigenschaften der Dichtung während einer langen Gebrauchsdauer erreicht.

Eine weitere Dichtung ist aus der DE 103 40 802 A1 bekannt. Der Dichtring dieser Dichtung besteht aus einem elastomeren Werkstoff, der elektrisch leitfähig ist. Die Dichtung gelangt zur Abdichtung von Bauteilen zur Anwendung, die Verzahnungsteile umfassen, wobei bei Bewegung dieser Verzahnungsteile Ladungstrennungen stattfinden. Die dadurch entstehenden Ströme werden teilweise durch das abzudichtende Medium, also das verwendete Schmiermittel, abgeleitet, und teilweise werden Ströme an die gegeneinander abzudichtenden Bauteile weitergeleitet. Durch den elektrisch leitfähigen und elastomeren Werkstoff ist von Vorteil, dass Ströme einfach durch den Dichtring hindurch ableitbar sind.
In einem der vorbekannten Ausführungsbeispiele ist der dynamisch beanspruchten Dichtlippe auf der dem abzudichtenden Raum axial abgewandten Seite eine Staublippe zugeordnet, die einstückig und materialeinheitlich mit der Dichtlippe ausgebildet ist und folglich ebenfalls aus einem elektrisch leitfähigen und elastomeren Werkstoff besteht.
Dabei ist allerdings zu beachten, dass elastomere Werkstoffe während ihrer bestimmungsgemäßen Verwendung stets ausreichen geschmiert werden müssen, um eine zufriedenstellende Gebrauchsdauer zu erreichen, wobei die Schmierung normalerweise durch das abzudichtende Medium erfolgt. Ist die Schmierung während der bestimmungsgemäßen Verwendung der Dichtung mangelhaft, verschleißt der elastomere Werkstoff des Dichtrings rasch und die Dichtung weist bereits nach einer kurzen Gebrauchsdauer verschlechterte Gebrauchseigenschaften auf.

### Darstellung der Erfindung

Der Erfindung liegt die Aufgabe zu Grunde, eine Dichtung der eingangs genannten Art derart weiterzuentwickeln, dass diese gleichbleibend gute Gebrauchseigenschaften während einer langen Gebrauchsdauer aufweist, auch dann, wenn sie nur mangelhaft oder gar nicht vom abzudichtenden Medium aus dem abzudichtenden Raum geschmiert wird. Die Dichtung soll außerdem eine elektrostatische Aufladung und eine daraus resultierende Beschädigung der gegeneinander abzudichtenden Maschinenelemente sicher verhindern, und der Tragring soll vor äußeren Einflüssen gut geschützt sein.

Gelöst wird diese Aufgabe durch die Merkmale von Anspruch 1. Auf vorteilhafte Ausgestaltungen nehmen die Unteransprüche Bezug.

Zur Lösung der Aufgabe ist es vorgesehen, dass der Dichtring den Tragring mittels einer Elastomerspur mittelbar anliegend berührt, dass der Tragring (1) im Wesentlichen L-förmig ausgebildet ist, mit einem Radialschenkel (7) und einem in radialer Richtung (4) außen an den Radialschenkel (7) anschließenden Axialschenkel (8), dass die Elastomerspur den Axialschenkel und den Radialschenkel vollständig umschließt, dass radial innenumfangsseitig an einem Radialschenkel des Tragrings, in axialer Richtung zwischen der dynamisch beanspruchten Dichtlippe und der dynamisch beanspruchten weiteren Dichtlippe, eine mit dem Material der Elastomerspur einheitlich ausgebildete Elastomerdichtlippe angeordnet ist, die - im eingebauten Zustand der Dichtung - eine abzudichtende Oberfläche einer abzudichtenden Welle unter radialer Vorspannung dichtend umschließt.

Der Dichtring berührt den Tragring mittels einer Elastomerspur mittelbar anliegend.

Die Elastomerspur umschließt den Axialschenkel und den Radialschenkel vollständig. Hierbei ist von Vorteil, dass der Tragring dadurch besonders gut vor äußeren Einflüssen, zum Beispiel vor einer Beaufschlagung mit Feuchtigkeit, geschützt ist.

Die Elastomerdichtlippe kann als Vorschaltdichtlippe für die weitere Dichtlippe ausgebildet und dieser axial in Richtung der Umgebung vorgeschaltet sein.

Die Dichtung hat den Vorteil, dass polymere Werkstoffe - im Gegensatz zu elastomeren Werkstoffen - auch dann weitgehend gleichbleibend gute Gebrauchseigenschaften während einer langen Gebrauchsdauer aufweisen, wenn sie nur mangelhaft geschmiert sind. Aus diesem Grund kann die dynamisch beanspruchte Dichtlippe problemlos als praktisch nicht-geschmierte Vorschaltdichtung auf der der Umgebung zugewandten Seite einer Hauptdichtlippe angeordnet sein.
Gegenüber einem elektrisch leitfähigen Vliesstoff hat ein elektrisch leitfähiger polymerer Werkstoff den Vorteil, dass die Anpressung der Dichtlippe an eine abzudichtende Oberfläche eines abzudichtenden Maschinenelements während der gesamten Gebrauchsdauer praktisch konstant ist.
Ebenfalls im Gegensatz zu einer Dichtlippe, die aus einem elektrisch leitfähigen Vliesstoff besteht, hält eine Dichtlippe aus einem polymeren Werkstoff Trockenlauf vergleichsweise gut aus, ein polymerer Werkstoff nimmt keine Feuchtigkeit auf und kann außerdem abzudichtende Maschinenelemente während einer langen Gebrauchsdauer sicher abdichten, die mit hohen Drehzahlen, zum Beispiel mit mehr als 20.000 min⁻¹, betrieben werden. Außerdem haben Dichtringe aus einem polymeren Werkstoff im Vergleich zu Dichtringen aus einem Vliesstoff den Vorteil, dass sie einen möglichen Wellenversatz einer abzudichtenden Welle besser ausgleichen können.

Durch den elektrisch leitfähigen und polymeren Werkstoff des Dichtrings entsteht eine entkoppelte elektrische Brücke zwischen den gegeneinander abzudichtenden Maschinenelementen. Diese gegeneinander abzudichtenden Maschinenelemente können beispielsweise durch eine abzudichtende Welle mit einer abzudichtenden Oberfläche und einem Gehäuse gebildet sein, das die abzudichtende Welle mit radialem Abstand außenumfangsseitig umschließt, wobei in dem durch den Abstand gebildeten Spalt die Dichtung angeordnet ist.

Die dynamisch beanspruchte Dichtlippe ist als Vorschaltdichtlippe ausgebildet. Bei einer Vorschaltdichtlippe handelt es sich um eine entkoppelte elektrische Brücke. Unter "entkoppelt" wird in diesem Zusammenhang verstanden, dass die Dichtfunktion einer zur Anwendung gelangenden Hauptdichtlippe von der Funktion einer elektrischen Brücke, die durch die Vorschaltdichtlippe gebildet ist, entkoppelt ist. Die Vorschaltdichtlippe steht dabei nicht in direktem Kontakt mit dem abzudichtenden Medium. Dabei ist von Vorteil, dass der elektrische Widerstand der Vorschaltdichtlippe während der gesamten Gebrauchsdauer im Wesentlichen konstant ist. Würde die Vorschaltdichtlippe mit dem abzudichtenden Medium in Kontakt gelangen, würde sich der Widerstand während der bestimmungsgemäßen Verwendung der Dichtung stets und unkontrolliert verändern.

Der dynamisch beanspruchten Dichtlippe ist eine dynamisch beanspruchte weitere Dichtlippe als Hauptdichtlippe zur Abdichtung eines abzudichtenden Mediums in einem abzudichtenden Raum in einer funktionstechnischen Reihenschaltung in axialer Richtung vorgeschaltet. Der Werkstoff, aus dem eine derartige weitere Dichtlippe besteht, kann an die jeweiligen Gegebenheiten des Anwendungsfalles angepasst sein. Es ist nicht erforderlich, dass die weitere Dichtlippe ebenfalls elektrisch leitfähig ausgebildet ist.

Gemäß einer vorteilhaften Ausgestaltung kann es vorgesehen sein, dass der elektrisch leitfähige und polymere Werkstoff ein PTFE-Werkstoff ist. Ein solcher Werkstoff weist die zuvor beschriebenen Vorteile in besonderem Maße auf, weil aus diesem Werkstoff bestehende Dichtlippen praktisch selbstschmierende Eigenschaften haben. Eine Dichtlippe aus einem solchen Werkstoff weist deshalb auch nach einer langen Gebrauchsdauer nahezu keinen Verschleiß und deshalb immer weitgehend dieselben Gebrauchseigenschaften auf.

Die Ummantelung und die Dichtlippe sind bevorzugt materialeinheitlich ausgebildet. Hierbei ist von Vorteil, dass eine solche Dichtung fertigungstechnisch einfach und kostengünstig herstellbar ist.
Sollte es durch die jeweiligen Gegebenheiten des Anwendungsfalles vorteilhaft sein, die Ummantelung und die Dichtlippe aus voneinander abweichenden Werkstoffen herzustellen, sind diese beiden voneinander abweichenden polymeren Werkstoffe jeweils elektrisch leitfähig, um elektrostatische Aufladungen aus der Dichtungsanordnung, die die Dichtung umfasst, ableiten zu können.

Erfindungsgemäß ist es vorgesehen, dass der Tragring im Wesentlichen L-förmig ausgebildet ist, mit einem Radialschenkel und einem in radialer Richtung außen an den Radialschenkel anschließenden Axialschenkel.

Generell kann der Tragring aus einem metallischen oder einem polymeren Werkstoff bestehen.

Eine elektrische Leitfähigkeit des Tragrings ist für die vorteilhaften Gebrauchseigenschaften der Dichtung nicht erforderlich, weil ein elektrischer Spannungsdurchschlag dadurch vermieden wird, dass der Dichtring von der Dichtlippe bis zur Ummantelung aus einem elektrisch leitfähigen Polymer besteht.

Radial innenseitig des Radialschenkels ist üblicherweise die dynamisch beanspruchte Dichtlippe angelenkt. Die Ummantelung ist demgegenüber durch den Axialschenkel radial außenseitig abgestützt.

Der Axialschenkel kann von der Ummantelung außenumfangsseitig vollständig umschlossen sein. Hierbei ist von Vorteil, dass die elektrische Leitfähigkeit der Dichtung durch die gute Abstützung der Ummantelung durch den Axialschenkel besonders zuverlässig funktioniert.

Die Ummantelung erstreckt sich, in radialer Richtung am Radialschenkel entlang, einstückig ineinander übergehend bis in die dynamisch beanspruchte Dichtlippe. Dadurch ergibt sich eine einfache elektrisch leitende Verbindung zwischen den gegeneinander abzudichtenden Maschinenelementen, zum Beispiel zwischen einer abzudichtenden Welle und einem Gehäuse, das die abzudichtende Welle umfangsseitig umschließt.

Der elektrisch leitfähige Dichtring bewirkt einen kontrollierten elektrischen Potentialausgleich zwischen den gegeneinander abzudichtenden Maschinenelementen.
Eine mechanische Beschädigung der Maschinenelemente durch eine elektrostatische Aufladung eines der Maschinenelemente und ein anschließender Spannungsdurchschlag zum anderen Maschinenelement mit einem anderen elektrischen Potential sind folglich ausgeschlossen.

In der Dichtungsanordnung, in der der zuvor beschriebene Dichtring zur Anwendung gelangt, ist eines der gegeneinander abzudichtenden Maschinenelemente auf ein definiertes Massepotential (beispielsweise die Karosserie eines Kraftfahrzeugs als elektrisches Massepotential) geerdet, so dass durch den elektrisch leitfähigen Dichtring ein Potentialausgleich zum anderen Maschinenelement erreicht wird.

Nach einer ersten Ausgestaltung kann es vorgesehen sein, dass die dynamisch beanspruchte Dichtlippe als Hauptdichtlippe zur Abdichtung eines abzudichtenden Mediums in einem abzudichtenden Raum ausgebildet ist. Hierzu ist die dynamisch beanspruchte Dichtlippe während der bestimmungsgemäßen Verwendung der Dichtung zumeist axial in Richtung des abzudichtenden Raums vorgewölbt.
Auf der dem abzudichtenden Maschinenelement radial zugewandten Seite der Dichtlippe kann diese zum Beispiel eine Oberflächenprofilierung aufweisen, wobei die Oberflächenprofilierung zum Beispiel Schmiermitteltaschen und/oder einen Rückförderdrall aufweisen kann.

Die dynamisch beanspruchte weitere Dichtlippe kann aus einem polymeren oder eleastomeren Werkstoff bestehen. Gelangt ein polymerer Werkstoff zur Anwendung, beispielsweise ein PTFE-Werkstoff, sind separat hergestellte Federelemente, wie beispielsweise Ringwendelfedern entbehrlich, die die weitere Dichtlippe unter elastischer radialer Vorspannung an das abzudichtende Maschinenelement andrücken.

Gelangt demgegenüber ein elastomerer Werkstoff zur Anwendung, kann dessen Dichtlippe radial außenumfangsseitig von einem Federelement, beispielsweise einer Ringwendelfeder, umschlossen sein. Insbesondere bei stillstehender abzudichtender Welle und/oder bei einem nur geringen relativen Überdruck im abzudichtenden Raum sorgt das Federelement für eine gute Abdichtung durch die weitere Dichtlippe auf der abzudichtenden Oberfläche des abzudichtenden Maschinenelements.

Der Tragring kann aus einem metallischen Werkstoff bestehen. Solche Tragringe sind in vielen Abmessungen einfach und kostengünstig herstellbar.

Ohne einen elektrischen Potentialausgleich, wie er durch die zuvor beschriebene Dichtung bewirkt wird, könnten durch Spannungsdurchschläge mechanische Beschädigungen der gegeneinander abzudichtenden Maschinenelemente verursacht werden. Durch den Potentialausgleich werden unterschiedlich große elektrische Potentiale der Maschinenelemente ausgeglichen.
Ein Spannungsdurchschlag ist generell umso wahrscheinlicher, je enger die Maschinenelemente mit unterschiedlichen elektrischen Potentialen einander benachbart zugeordnet sind. Ein solcher Spannungsdurchschlag kann einen Materialabtrag an dem Maschinenelement mit relativ geringerer Ladung bewirken und eine unerwünschte Veränderung des Materialgefüges in dem Bereich, in dem der Spannungsdurchschlag erfolgt.

Das erste Maschinenelement kann durch eine Antriebswelle eines Elektromotors gebildet sein, das zweite Maschinenelement durch ein Gehäuse eines mit dem Elektromotor verbundenen und die Antriebswelle umschließenden Getriebes.

Diese spezielle Verwendung der zuvor beschriebenen Dichtung ist besonders vorteilhaft. Bilden der Elektromotor und das Getriebe gemeinsam eine Antriebseinheit, kommt es durch den Betrieb des Elektromotors üblicherweise zu einer statischen Aufladung einzelner Bauteile der Antriebseinheit und damit zu Potentialdifferenzen zwischen Bauteilen, die nicht statisch aufgeladen sind. Generell besteht die Möglichkeit, durch vergleichsweise aufwändige konstruktive Maßnahmen einen Potentialausgleich zwischen Bauteilen, die unterschiedliche Potentiale aufweisen, herbeizuführen. In der erfindungsgemäßen Dichtung wird dieser Potentialausgleich sehr einfach durch den Dichtring aus einem elektrisch leitfähigen Werkstoff selbst erreicht, wobei die Dichtung einen einfachen Aufbau hat und einfach und kostengünstig herstellbar ist.

### Kurzbeschreibung der Zeichnung

Zwei nicht erfindungsgemäße Beispiele und zwei Ausführungsbeispiele der beanspruchten Dichtung sind in den Figuren 1 bis 4 schematisch dargestellt und werden im Folgenden näher beschrieben.

Diese zeigen:
- Figur 1: ein erstes nicht erfindungsgemäßes Ausführungsbeispiel, das einen besonders einfachen Aufbau aufweist, wobei die Dichtlippe des Dichtrings als Hauptdichtlippe zur Abdichtung eines abzudichtenden Mediums in einem abzudichtenden Raum ausgebildet ist,
- Figur 2: ein zweites nicht erfindungsgemäßes Ausführungsbeispiel, ähnlich dem Ausführungsbeispiel aus Figur 1, wobei die dynamisch beanspruchte Dichtlippe als Vorschaltdichtlippe ausgebildet ist, bezogen auf eine weitere Dichtlippe, die als Hauptdichtlippe zur Abdichtung eines abzudichtenden Mediums in einem abzudichtenden Raum ausgebildet ist,
- Figur 3: ein erstes Ausführungsbeispiel der Erfindung, bei dem die Dichtlippen jeweils durch eine Elastomerspur mittelbar am Tragring festgelegt sind,
- Figur 4: ein zweites Ausführungsbeispiel der Erfindung, ähnlich dem Ausführungsbeispiel aus Figur 3, wobei als weitere Dichtlippe ein elastomere Dichtlippe zur Anwendung gelangt, die außenumfangsseitig von einer Ringwendelfeder umschlossen ist.

### Ausführung der Erfindung

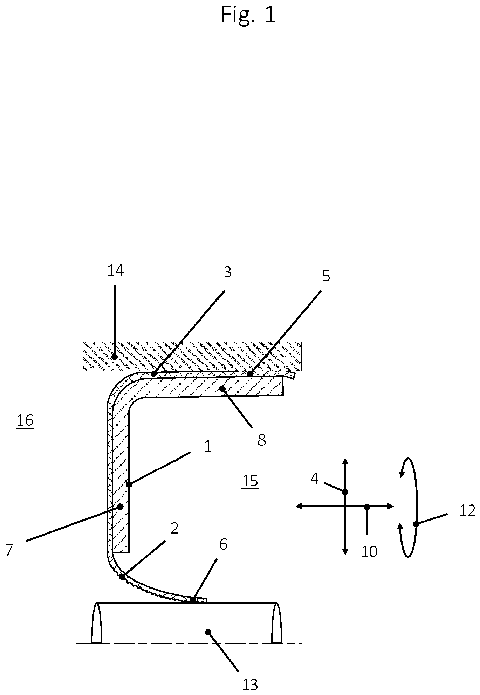

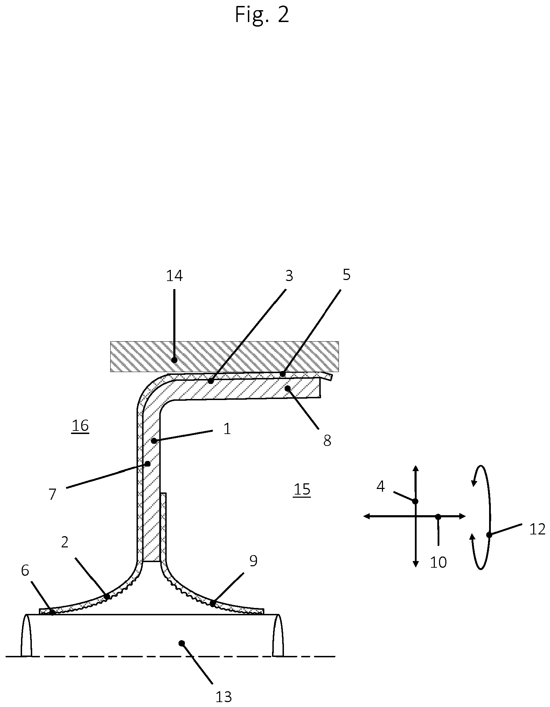

In den Figuren 1 bis 4 ist jeweils ein Ausführungsbeispiel einer Dichtung gezeigt, wobei die Ausführungsbeispiele gemäß Figuren 1 und 2 nicht erfindungsgemäß sind.
Die Dichtung umfasst einen Tragring 1 und einen Dichtring 2, wobei der Dichtring 2 am Tragring 1 festgelegt ist.

Der Tragring 1 ist L-förmig ausgebildet und umfasst einen Radialschenkel 7 und einen Axialschenkel 8, der in Umfangsrichtung 12 von der Ummantelung 5 vollständig umschlossen ist. Der Dichtring 2 umfasst eine dynamisch beanspruchte Dichtlippe 6, die auf der der Ummantelung 5 radial abgewandten Seite des Dichtrings 2 angeordnet ist.

Der Dichtring 2 besteht aus einem elektrisch leitfähigen und polymeren Werkstoff, in den gezeigten Ausführungsbeispielen aus einem PTFE-Werkstoff, wobei die Ummantelung 5 und die Dichtlippe 6 einstückig ineinander übergehend ausgebildet sind. Dadurch ist der Dichtring 2 von der Dichtlippe 6 bis zur Ummantelung 5 elektrisch leitfähig, um einen elektrischen Potentialausgleich zwischen einer abzudichtenden Welle 13 und einem Gehäuse 14 sicherzustellen, das die abzudichtende Welle 13 mit radialem Abstand außenumfangsseitig umschließt. Elektrostatische Aufladung zwischen der abzudichtenden Welle 13 und dem Gehäuse 14 werden dadurch verhindert, ebenso wie ein Spannungsdurchschlag, der die gegeneinander abzudichtenden Maschinenelemente 13, 14 beschädigen könnte.

Bei der dargestellten Dichtungsanordnung ist es besonders vorteilhaft, dass die Ummantelung 5 des Dichtrings nicht nur für den zuvor beschriebenen Potentialausgleich sorgt, sondern außerdem statisch dichtend ausgebildet ist.

Einer separat herzustellenden statischen Dichtung zur Abdichtung gegenüber dem Gehäuse 14 bedarf es daher nicht.

In Figur 1 ist ein erstes Ausführungsbeispiel gezeigt, das besonders einfach und kostengünstig herstellbar ist. Die Dichtung besteht aus nur zwei Teilen, nämlich dem Tragring 1 und dem Dichtring 2, wobei der Dichtring 2 die Ummantelung 5 und die Dichtlippe 6 umfasst, die einstückig ineinander übergehend und materialeinheitlich ausgebildet sind.

Die Dichtlippe 6 ist in dem hier gezeigten Ausführungsbeispiel axial in Richtung eines abzudichtenden Raums 15 der Dichtungsanordnung vorgewölbt.

In Figur 2 ist die dynamisch beanspruchte Dichtlippe 6 demgegenüber als Vorschaltdichtlippe ausgebildet und axial in Richtung der Umgebung 16 der Dichtungsanordnung vorgewölbt. Zusätzlich ist in diesem Ausführungsbeispiel die weitere Dichtlippe 9 vorgesehen, die als Hauptdichtlippe zur Abdichtung des abzudichtenden Mediums im abzudichtenden Raum 15 vorgesehen ist. Die weitere Dichtlippe 9 ist der dynamisch beanspruchten Dichtlippe 6 in einer funktionstechnischen Reihenschaltung, betrachtet aus dem abzudichtenden Raum 15, in axialer Richtung 10 vorgeschaltet.

In den Figuren 1 und 2 ist die dynamisch beanspruchte Dichtlippe 6 unmittelbar anliegend am Tragring 1 festgelegt. Auch die weitere Dichtlippe 9 in Figur 2 berührt den Tragring 1 unmittelbar anliegend.

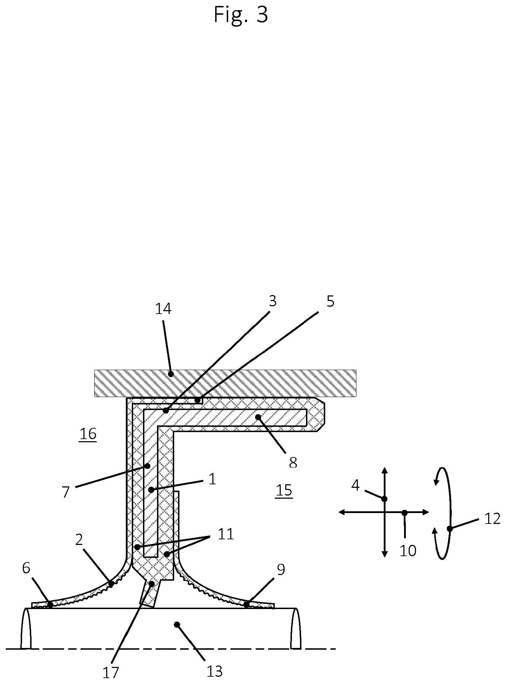

In Figur 3 ist ein erstes Ausführungsbeispiel gemäß der Erfindung gezeigt, ähnlich dem Ausführungsbeispiel aus Figur 2, wobei der Tragring 1 von der Elastomerspur 11 vollständig umschlossen ist. Die dynamisch beanspruchte Dichtlippe 6 und die dynamisch beanspruchte weitere Dichtlippe 9 sind mit der Elastomerspur 11 verbunden, so dass der Dichtring 2 den Tragring 1 mittels der Elastomerspur 11 mittelbar anliegend berührt.

Radial innenumfangsseitig ist am Radialschenkel 7 eine Elastomerdichtlippe 17 angeordnet, die in axialer Richtung 10 zwischen der dynamisch beanspruchten Dichtlippe 6 und der dynamisch beanspruchten weiteren Dichtlippe 9 die abzudichtende Oberfläche der abzudichtenden Welle 13 unter radialer Vorspannung dichtend umschließt.

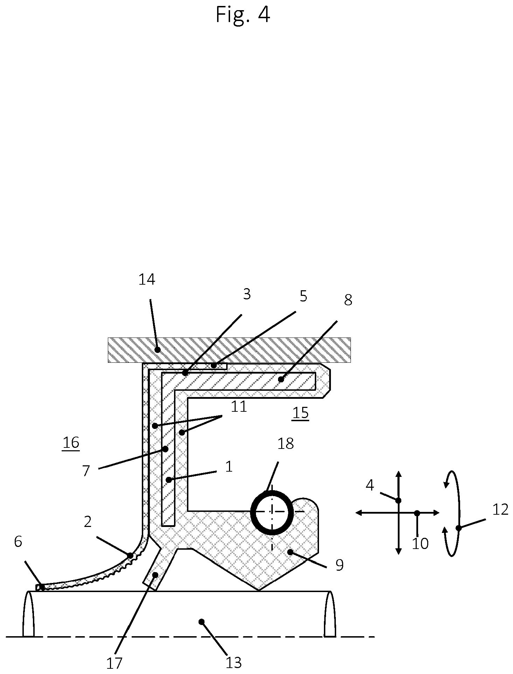

In Figur 4 ist ein zweites Ausführungsbeispiel gemäß der Erfindung gezeigt, ähnlich dem Ausführungsbeispiel aus Figur 3, wobei anstelle der aus einem polymeren Werkstoff bestehenden dynamisch beanspruchten weiteren Dichtlippe 9 eine dynamisch beanspruchte weitere Dichtlippe 9 zur Anwendung gelangt, die aus einem elastomeren Werkstoff besteht. Diese weitere Dichtlippe 9 ist in Form eines konventionellen Radialwellendichtrings ausgebildet, wobei sie durch eine Ringwendelfeder 18 dichtend an den Außenumfang der abzudichtenden Welle 13 angedrückt ist.

Ebenso wie in Figur 3, ist in axialer Richtung 10 zwischen der dynamisch beanspruchten Dichtlippe 6 und der dynamisch beanspruchten weiteren Dichtlippe 9 eine Elastomerdichtlippe 17 angeordnet, die eine Vorschaltdichtung für die weitere Dichtlippe 9 bildet und dieser axial in Richtung der Umgebung 16 vorgeschaltet ist.

In den Figuren 3 und 4 wird der zuvor beschriebene elektrische Potentialausgleich durch die dynamisch beanspruchte Dichtlippe 6 erreicht, die die abzudichtende Welle 13 mit dem Gehäuse elektrisch leitend verbindet.

Insgesamt ist von hervorzuhebenden Vorteil, dass die dynamisch beanspruchte Dichtlippe 6, die den elektrischen Potentialausgleich bewirkt, aus einem verschleißresistenten polymeren Werkstoff besteht, so dass diese Dichtlippe nicht nur, wie in Figur 1 dargestellt, im abzudichtenden Raum 15 mit abzudichtenden Medium angeordnet sein kann und dadurch von abzudichtendem Medium geschmiert wird. Sie kann auch, wie in den Figuren 2 bis 4 gezeigt, in der Umgebung 16 angeordnet sein und deshalb mit dem abzudichtenden Medium im abzudichtenden Raum 15 nicht in Berührung kommen. Wegen des vorteilhaften polymeren Werkstoffs, der zur Anwendung gelangt, ist eine Schmierung durch das abzudichtende Medium nicht erforderlich.

## Patentansprüche

1. Dichtung, umfassend einen Tragring (1) und zumindest einen Dichtring (2), wobei der Dichtring (2) und der Tragring (1) miteinander verbunden sind, wobei der Tragring (1) einen Außenumfang (3) aufweist und in radialer Richtung (4) außenumfangsseitig von einer Ummantelung (5) des Dichtrings (2) zumindest teilweise umschlossen ist, wobei der Dichtring (2) zumindest eine dynamisch beanspruchte Dichtlippe (6) aufweist, die auf der der Ummantelung (5) radial abgewandten Seite des Dichtrings (2) angeordnet ist, wobei der Dichtring (2) aus einem elektrisch leitfähigen und polymeren Werkstoff besteht und wobei die Ummantelung (5) und die Dichtlippe (6) einstückig ineinander übergehend ausgebildet sind, wobei die dynamisch beanspruchte Dichtlippe (6) als Vorschaltdichtlippe ausgebildet ist und wobei der dynamisch beanspruchten Dichtlippe (6) eine dynamisch beanspruchte weitere Dichtlippe (9) als Hauptdichtlippe zur Abdichtung eines abzudichtenden Mediums in einem abzudichtenden Raum in einer funktionstechnischen Reihenschaltung in axialer Richtung (10) vorgeschaltet ist, **dadurch gekennzeichnet, dass** der Dichtring (2) den Tragring (1) mittels einer Elastomerspur (11) mittelbar anliegend berührt, dass der Tragring (1) im Wesentlichen L-förmig ausgebildet ist, mit einem Radialschenkel (7) und einem in radialer Richtung (4) außen an den Radialschenkel (7) anschließenden Axialschenkel (8), dass die Elastomerspur (11) den Axialschenkel (8) und den Radialschenkel (7) vollständig umschließt, dass radial innenumfangsseitig an einem Radialschenkel (7) des Tragrings (1), in axialer Richtung (10) zwischen der dynamisch beanspruchten Dichtlippe (6) und der dynamisch beanspruchten weiteren Dichtlippe (9), eine mit dem Material der Elastomerspur (11) einheitlich ausgebildete Elastomerdichtlippe (17) angeordnet ist, die - im eingebauten Zustand der Dichtung - eine abzudichtende Oberfläche einer abzudichtenden Welle (13) unter radialer Vorspannung dichtend umschließt.

2. Dichtung nach Anspruch 1, **dadurch gekennzeichnet, dass** die Elastomerdichtlippe (17) als Vorschaltdichtung für die weitere Dichtlippe (9) ausgebildet und dieser axial in Richtung der Umgebung (16) vorgeschaltet ist.

3. Dichtung nach einem der Ansprüche 1 oder 2, **dadurch gekennzeichnet, dass** die dynamisch beanspruchte weitere Dichtlippe (9) aus einem polymeren oder elastomeren Werkstoff besteht.

4. Dichtung nach einem der Ansprüche 1 bis 3, **dadurch gekennzeichnet, dass** der elektrisch leitfähige und polymere Werkstoff ein PTFE-Werkstoff ist.

5. Dichtring nach einem der Ansprüche 1 bis 4, **dadurch gekennzeichnet, dass** die Ummantelung (5) und die Dichtlippe (6) materialeinheitlich ausgebildet sind.

6. Dichtung nach einem der Ansprüche 1 bis 5, **dadurch gekennzeichnet, dass** die Ummantelung (5) statisch dichtend ausgebildet ist.

7. Dichtung nach einem der Ansprüche 1 bis 6, **dadurch gekennzeichnet,**
**dass** der Axialschenkel (8) von der Ummantelung (5) außenumfangsseitig vollständig umschlossen ist.

8. Dichtung nach einem der Ansprüche 1 bis 7, **dadurch gekennzeichnet,**
**dass** sich die Ummantelung (5), in radialer Richtung (4) am Radialschenkel (7) entlang, einstückig ineinander übergehend bis in die dynamisch beanspruchte Dichtlippe (6) erstreckt.

9. Dichtung nach einem der Ansprüche 1 bis 8, **dadurch gekennzeichnet,**
**dass** der Tragring (1) aus einem metallischen Werkstoff besteht.

## Claims

1. Seal, comprising a supporting ring (1) and at least one sealing ring (2), wherein the sealing ring (2) and the supporting ring (1) are connected to one another, wherein the supporting ring (1) has an outer circumference (3) and is at least partially surrounded in a radial direction (4) on the outer circumferential side by an encasement (5) of the sealing ring (2), wherein the sealing ring (2) has at least one dynamically loaded sealing lip (6) which is arranged on that side of the sealing ring (2) which is radially averted from the encasement (5), wherein the sealing ring (2) is composed of an electrically conductive and polymer material and wherein the encasement (5) and the sealing lip (6) are formed so as to transition integrally into one another, wherein the dynamically loaded sealing lip (6) is formed as an upstream sealing lip and wherein the dynamically loaded sealing lip (6) is positioned upstream, in a functional series arrangement in an axial direction (10), of a dynamically loaded further sealing lip (9) as a main sealing lip for sealing off a medium to be sealed off in a space to be sealed off, **characterized in that** the sealing ring (2) is in indirectly abutting contact with the supporting ring (1) by means of an elastomer strip (11), **in that** the supporting ring (1) is of substantially L-shaped form, with a radial limb (7) and with an axial limb (8) which adjoins the radial limb (7) at the outside in the radial direction (4), **in that** the elastomer strip (11) completely surrounds the axial limb (8) and the radial limb (7), **in that** arranged radially on the inner circumferential side of a radial limb (7) of the supporting ring (1), in the axial direction (10) between the dynamically loaded sealing lip (6) and the dynamically loaded further sealing lip (9), is an elastomer sealing lip (17) which is formed integrally with the material of the elastomer strip (11) and which, in the installed state of the seal, sealingly surrounds a surface to be sealed off of a shaft (13) to be sealed off with radial preload.

2. Seal according to Claim 1, **characterized in that** the elastomer sealing lip (17) is formed as an upstream seal for the further sealing lip (9) and is positioned axially upstream of the latter in the direction of the surrounding area (16).

3. Seal according to one of Claims 1 or 2, **characterized in that** the dynamically loaded further sealing lip (9) is composed of polymer or elastomer material.

4. Seal according to one of Claims 1 to 3, **characterized in that** the electrically conductive and polymer material is a PTFE material.

5. Sealing ring according to one of Claims 1 to 4, **characterized in that** the encasement (5) and the sealing lip (6) are formed in a materially integral manner.

6. Seal according to one of Claims 1 to 5, **characterized in that** the encasement (5) is designed to impart a static sealing action.

7. Seal according to one of Claims 1 to 6, **characterized in that** the axial limb (8) is completely surrounded on the outer circumferential side by the encasement (5).

8. Seal according to one of Claims 1 to 7, **characterized in that** the encasement (5) extends in the radial direction (4) along the radial limb (7) so as to transition in integral fashion into the dynamically loaded sealing lip (6).

9. Seal according to one of Claims 1 to 8, **characterized in that** the supporting ring (1) is composed of a metallic material.

## Revendications

1. Garniture d'étanchéité, comprenant une bague de support (1) et au moins une bague d'étanchéité (2), la bague d'étanchéité (2) et la bague de support (1) étant reliées l'une à l'autre, la bague de support (1) comportant une circonférence extérieure (3) et étant au moins partiellement enfermée, du côté de la circonférence extérieure dans la direction radiale (4), par une enveloppe (5) de la bague d'étanchéité (2), la bague d'étanchéité (2) comportant au moins une lèvre d'étanchéité (6) qui est sollicitée dynamiquement et qui est disposée du côté de la bague d'étanchéité (2) qui est radialement opposé à l'enveloppe (5), la bague d'étanchéité (2) étant en un matériau polymère électriquement conducteur et l'enveloppe (5) et la lèvre d'étanchéité (6) étant formées d'une seule pièce de manière en venue de matière, la lèvre d'étanchéité (6) sollicitée dynamiquement étant conçue comme une lèvre d'étanchéité amont et la lèvre d'étanchéité (6) sollicitée dynamiquement étant montée en amont, dans la direction axiale (10), d'une autre lèvre d'étanchéité (9), sollicitée dynamiquement, servant de lèvre d'étanchéité principale destinée à étanchéifier un milieu à étanchéifier dans un espace à étanchéifier dans un montage en série fonctionnelle, **caractérisée en ce que** la bague d'étanchéité (2) vient indirectement en appui sur la bague de support (1) au moyen d'une piste en élastomère (11) de sorte que la bague de support (1) a sensiblement la forme d'un L pourvu d'une branche radiale (7) et d'une branche axiale (8) se raccordant extérieurement dans la direction radiale (4) à la branche radiale (7), **en ce que** la piste élastomère (11) enserre complètement la branche axiale (8) et la branche radiale (7) **en ce que**, radialement du côté de la circonférence intérieure, une lèvre d'étanchéité en élastomère (17) formée uniformément avec le matériau de la piste en élastomère (11) est disposée sur une branche radiale (7) de la bague de support (1), dans la direction axiale (10) entre la lèvre d'étanchéité (6) dynamiquement sollicitée et l'autre lèvre d'étanchéité (9), sollicitée dynamiquement, et renferme de manière étanche une surface à étanchéifier d'un arbre (13) à étanchéifier sous précontrainte radiale lorsque la garniture d'étanchéité est intégrée.

2. Garniture d'étanchéité selon la revendication 1, **caractérisée en ce que** la lèvre d'étanchéité en élastomère (17) est conçue comme une garniture d'étanchéité amont destinée à l'autre lèvre d'étanchéité (9) et est montée axialement en amont de celle-ci en direction de l'environnement (16).

3. Garniture d'étanchéité selon l'une des revendications 1 ou 2, **caractérisée en ce que** l'autre lèvre d'étanchéité (9) sollicitée dynamiquement est en un matériau polymère ou élastomère.

4. Garniture d'étanchéité selon l'une des revendications 1 à 3, **caractérisée en ce que** le matériau polymère électriquement conducteur est un matériau PTFE.

5. Bague d'étanchéité selon l'une des revendications 1 à 4, **caractérisée en ce que** l'enveloppe (5) et la lèvre d'étanchéité (6) sont en le même matériau.

6. Garniture d'étanchéité selon l'une des revendications 1 à 5, **caractérisée en ce que** l'enveloppe (5) est conçue pour être étanche statiquement.

7. Garniture d'étanchéité selon l'une des revendications 1 à 6, **caractérisée en ce que** la branche axiale (8) est complètement enfermée du côté de la circonférence extérieure par l'enveloppe (5).

8. Garniture d'étanchéité selon l'une des revendications 1 à 7, **caractérisée en ce que** l'enveloppe (5) s'étend dans la direction radiale (4) le long de la branche radiale (7), d'une seule pièce en venue de matière jusque dans la lèvre d'étanchéité (6) sollicitée dynamiquement.

9. Garniture d'étanchéité selon l'une des revendications 1 à 8, **caractérisée en ce que** la bague de support (1) est en un matériau métallique.
